# EUROPEAN PATENT APPLICATION

(11) **EP 1 199 662 A2**
(43) Date of publication of application: **24.04.2002**
(21) Application number: 01307141.0
(22) Date of filing: 22.08.2001
(51) Int. Cl.: G06F 17/60, G06F 9/445, G06F 11/22

(54) **A method and system for the provision of product service bulletins to retail stations**

(30) Priority: 25.08.2000 US 648334
(71) Applicant: Marconi Commerce Systems Inc., Greensboro, North Carolina 27420 (US)
(72) Inventor: Wilson, Ron, Wilmington, North Carolina (US)
(74) Representative: Fitchett, Stuart Paul

(57) **Abstract**

A method and system for providing product service bulletins at remote locations (102) comprises downloading (258) product service bulletin to a remote retail station. Upon accessing a remote retail device, such as a fuel dispenser, an authorized service contractor is presented (304) with information relating to the product service bulletins that are related to the particular fuel dispenser. These may be used (308) by the service contractor to perform service on the fuel dispenser or to rectify a fault. Further, upon completion of any service recommended by the product service bulletin, the contractor may provide indicia that the task recommended has been performed.

## Description

The present invention relates to providing product service bulletins to retail stations, and more particularly to fuel stations and fuel dispensers, for subsequent use by service personnel.

Retail stations, particularly fuel retail stations, have become more sophisticated in recent years and now include complex components and software to operate retail devices. For instance fueling stations devices include fuel dispensers, site controllers, and a myriad of other devices within the fueling environment such as kiosks, video displays, or a car wash. The physical components of these retail station devices are routinely maintained, fixed or upgraded as new features become available. Not only do the retail station devices continue to be upgraded, but the software is also periodically upgraded as new features or elements are added to the functionality. New software may include merely new features, a new operating system, or an upgraded version of an operating system.

For basic fuel retail stations, there are typically three locations that contain microprocessor controllers and software associated therewith. The primary controller of the retail station is generally referred to as the site controller and has a microprocessor. Each fuel dispenser or kiosk device may also include one or more microprocessors. The microprocessor(s) within the fuel dispenser control core functions of the fuel dispenser such as hydraulic operations including the opening and closing of valves, meter readings, and the like. The microprocessor(s) also control the display functions, payment acceptors such as credit and debit card readers, the printer for receipts, a keypad and other functions. Software is used to enable these microprocessors with all the desired functionality. The site controller may communicate with and/or control one or both of the microprocessors in the fuel dispenser depending on the installation.

Unfortunately, retail stations frequently upgrade components and software in a somewhat haphazard manual manner. This may result in incompatibilities between existing components and/or software. Further, manufacturers do not always rid proffered upgrades of all problems ("bugs") prior to field installation. As a result, these bugs may occur in the field, disrupting orderly operation and requiring patches or further upgrades. One manner in which manufacturers address these problems is through the use of Product Service Bulletins (PSBs). In short, these PSBs outline the problem that may be occurring and suggest corrective actions. These are mailed or faxed to Authorized Service Contractors (ASCs), who then undertake the task of performing the recommended corrective action upon request or as they see fit.

Most retail device manufacturers divide these PSBs into differing levels of priority, with high priority items being faxed to the ASCs with instructions to fix the problem immediately. This may be appropriate, for example, when there are safety issues surrounding the problem. However, lower priority PSBs are typically mailed to the ASCs who then keep them on file. In an ideal world, the ASCs would have access to the PSBs in the field, perhaps in a notebook, and could reference the PSBs as they went about servicing retail stations. When the ASC came across a problem, they would be able to use their notebook to see if a PSB had been posted about this sort of problem, and if so, follow the instructions of the PSB to fix the problem. If not, they could trouble shoot the problem using alternate techniques as is conventional. However, ASCs do not always have the needed PSBs and even if they do have the PSBs, they may not realize that one or more PSBs may address the problems currently occurring at the retail station. Still further, where the PSB is intended to fix a problem that does not appear regularly, or does not interrupt normal functioning of the fuel dispenser or site controller, then the ASC may not even be aware of the problem and the potential solution.

Although this system has worked for many years, the pace with which technological advances in the retail industry are made is accelerating. This acceleration spurs ever more frequent upgrades to the software in the retail industry. Upgrades frequently result in PSBs, i.e., the more upgrades, the more potential PSBs. Thus, any problems associated with the system will rapidly become exacerbated.

In accordance with a first aspect of the present invention there is provided a method of delivering service information for a product to service personnel at a retail station, the method comprising generating a product service bulletin relating to solutions for known problems associated with particular products or services; downloading to at least one retail station device information in electronic form relating to said product service bulletin; and delivering said product service bulletin to the service personnel at said at least one retail station device.

In accordance with a second aspect of the invention there is provided a retail station device comprising a control system adapted to receive information in electronic form relating to a product service bulletin and deliver it to service personnel at said retail station device.

The present invention solves the problems associated with the prior art system by downloading information that relates to the Product Service Bulletins (PSBs) to retail stations, including fueling stations. When the Authorized Service Contractor (ASC) visits the retail station, the ASC may access the downloaded information to see which PSBs may be relevant.

The PSBs are preferably stored at the retail station devices in an electronic format. Alternatively, reference is made to PSBs that are available, and the ASC may remotely access the manufacturer or other site, perhaps over the Internet, and retrieve the PSB. Known components and software existent at a retail station may be linked to appropriate PSBs, thus only PSBs that are relevant to a particular retail station are in fact delivered to that particular retail station. This reduces the number of PSBs that the ASC must review when attempting to determine a problem and implement a solution.

The invention can allow the ASC to provide some form of indication that the subject matter of a particular PSB has been addressed at this retail station or retail station device. Thus, future visits by the same or another ASC will have a reference as to what work has been performed at the station.

An alert may be generated to the station operator in the event that the subject matter of high priority PSBs has not been addressed at the station after expiration of a predetermined amount of time, e.g., thirty days.

Preferred embodiments of the present invention will now be described with reference to the accompanying drawings, of which:
Figure 1 is a simplified drawing of a retail device known as a fuel dispenser;
Figure 2 is a simplified drawing of a fueling station;
Figure 3 is a simplified drawing of the overarching system of the present invention;
Figure 4 is a flow chart for the manufacturer to fueling station delivery of PSBs;
Figure 5 is a flow chart for manufacturer to ASC delivery of PSBs;
Figure 6 is a flow chart for the ASC to station communication; and
Figure 7 is a simplified schematic for the ASC to manufacturer communication to retrieve PSBs.

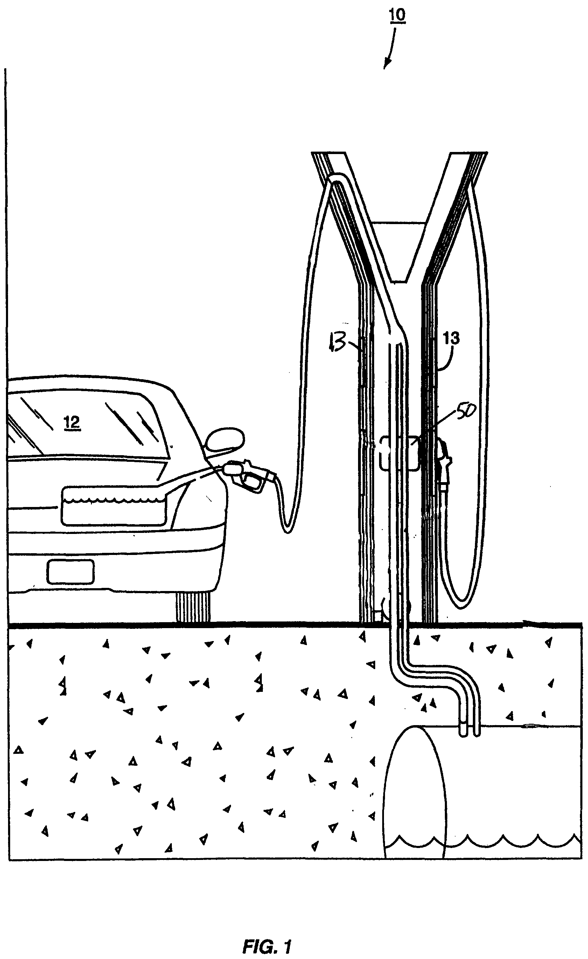

Referring to Figure 1, a fuel dispenser 10 is adapted to deliver a fuel, to a vehicle 12. A display 13 provides a user interface from which the user can determine a cost associated with a particular fueling transaction.

Control system 50 may be a microprocessor with an associated memory or the like and operates to control the vast majority of the various functions of the fuel dispenser 10 including, but not limited to: fuel transaction authorization, encryption associated with fuel transaction authorization, fuel grade selection, display and/or audio control as well as vapor recovery control and other function as may be employed on the fuel dispenser. As noted, control system 50 may actually comprise one or more microprocessors that may communicate with one another. Recent advances in the technology associated with the fuel dispenser 10 now enable the fuel dispenser 10 to act as an Internet interface, provide content, allow music downloads, or other functionality. Resident in the memory associated with the control system 50 is software that facilitates all of these functions. The present invention may use the Internet capability of the fuel dispenser 10 and further may co-opt the memory associated with the control system 50 to store PSBs or information relating to PSBs as will be described in greater detail below.

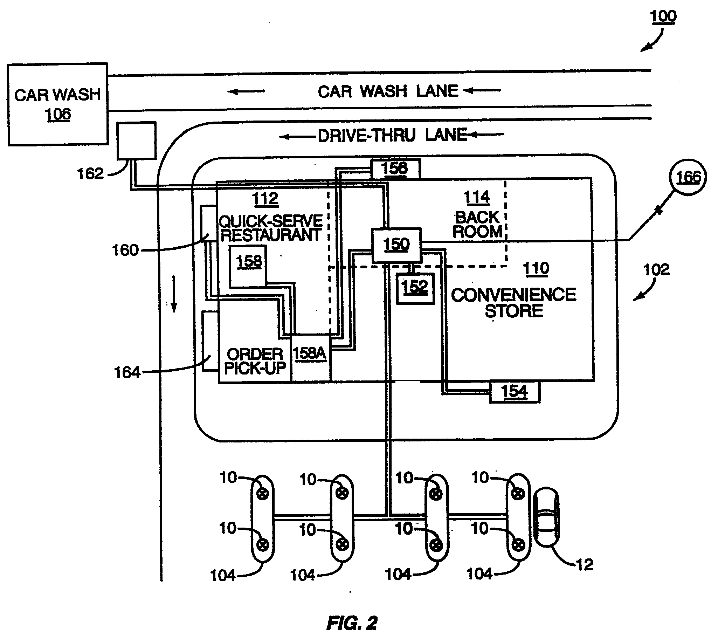

In addition to fuel dispenser 10, other retail devices may exist within a fueling station 100 that likewise may require electronic control systems and software to enable those electronic control systems as better understood with reference to Figure 2. Fueling station 100 may include a primary building 102, a plurality of fueling islands 104, and a car wash 106. Primary building 102 may include a convenience store 110, a quick serve restaurant 112, and a back room 114. It should be appreciated that the fueling station 100 is preferably an integrated fueling station that enables purchases of a multitude of goods and services at a multitude of locations.

A site controller 150 for controlling this fully integrated fueling station 100 may be positioned in back room 114, or other location within the fueling station 100 as needed or desired. Site controller 150 is preferably a computer, such as the G-SITE® or PASSPORT™ sold by assignee of the present invention. Site controller 150 is communicatively linked to fuel dispensers 10, a station attendant terminal 152 positioned within the convenience store 110, an external customer terminal 154, an external quick serve restaurant order terminal 156, an internal quick serve restaurant terminal 158, an external sensor 160, a car wash terminal 162, and other electronically controlled terminals positioned throughout the fueling station 100. Quick serve restaurant 112 may include an auxiliary order pick up terminal 158A that is proximate an order pick up window 164. These terminals and sensors facilitate the fully integrated nature of the fueling station 100.

Additionally, the site controller 150 may control a site wide vapor recovery pump, or other such devices that may exist within the fueling station 100. Vapor management systems may have their own microprocessors and memory, or may be integrated into the site controller 150 as needed or desired. However, every change in the regulations may result in a change in the software or hardware to comply with the new regulation.

Site controller 150 may also have access to remote content providers 166 either through the Internet or a dedicated phone line. In the exemplary embodiment, this is a high speed, large bandwidth connection allowing for fast transfers of large amounts of data. Thus, it is possible that an Internet capable fuel dispensers 10 can actually secure their Internet connection through the site controller 150. The present invention may co-opt the memory associated with the site controller 150 to store PSBs or information relating to PSBs as will described with greater detail below.

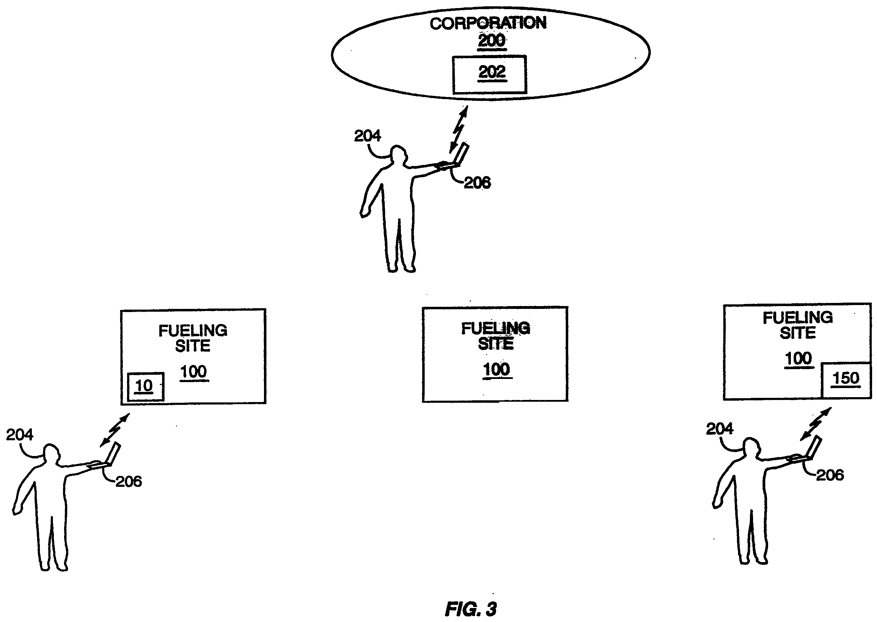

Turning now to Figure 3, the system of the present invention is disclosed that is applicable to retail stations. Corporation 200 supplies the hardware and/or software to the fueling stations 100 as is well understood. Corporate computer 202 may include a single server, a multitude of servers being interconnected through a local area network (LAN) or a wide area network (WAN), may include an external portal to the Internet, or the like as needed or desired. In the exemplary embodiment, corporate computer 202 hosts a web page that acts as a portal to data stored within memory associated with the computer 202 and in fact is connected to the site controllers 150 of the various fueling stations 100 to which hardware and/or software has been sold. It should be appreciated that the web page may include publicly accessible portions as well as proprietary portions that are only accessible through a firewall or other security measure.

An Authorized Service Contractor (ASC) 204 is an individual who is responsible for servicing components sold or leased from the corporation 200. While typically independent contractors, they may likewise be employees of the corporation 200. ASC 204 may be in possession of a portable computing device 206 such as a laptop computer sold by IBM. Particularly excluded from the definition of a portable computing device is a memory unit without any processing power such as a simple floppy disk. While not preferred, other portable computing devices are contemplated such as a cellular phone, personal digital assistant, or the like. Portable computing device 206 may communicate with the corporate computer 202 by means of a wire based or wireless connection as is well understood in the art. This may be accomplished with a DSL modem, a cable modem, a wireless modem, or other modem as needed or desired as well as the appropriate software to control such as modem. Alternatively, the portable computing device 206 may be selectively networked with the corporate computer 202 such as over a LAN having dedicated ports for such a connection or wirelessly such as by satellite or other remote communications. Other well known communicative connections are also contemplated

Further, the portable computing device 206 is adapted to communicate with the site controllers 150 and fuel dispensers 10 at the fueling stations 100. Again, this communication may be over any conventional communication means, wired or wireless, networked or dial in access as needed or desired.

In a typical situation, corporation 200 sells hardware and/or software to the fueling station 100. Some of these products may be incompatible with existing products at the fueling station 100. Once the problem is identified and a solution is generated, the corporation generates a Product Service Bulletin (PSB), which includes information about the nature of the problem, typical symptoms, and the solution. The PSB may be reference indicia to lead one to another source for addressing the nature of the problem, symptoms and the solution rather than containing this information within in itself. "Product service bulletin" or "PSB," are used herein, refers to either a PSB containing the relevant information regarding the problem, symptoms, and solution or reference indicia to another source containing such information.

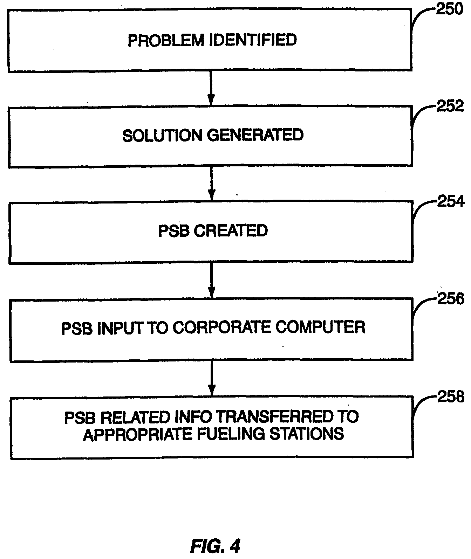

The present invention reduces the chance that errors will be uncorrected by providing PSBs or information relating to PSBs to the fueling station 100. In particular, and as illustrated in Figure 4, a problem is initially identified (block 250). This may be accomplished by customer complaints, in-house testing, or other technique as is well understood. Problems may range from incompatible systems of different printed circuit boards, to safety concerns, to printer receipt printing problems, or the like.

Once identified, most manufacturers and corporations 200 take great pains to generate a solution (block 252). Isolating the problem and generating a software patch, identifying a hardware solution, or the like may accomplish this as may be appropriate. Corporation 200 having satisfied itself that the solution generated is adequate, a PSB may be generated (block 254). A PSB may contain a description of the symptoms of the problem, a description of the hardware and software combinations that contribute to the problem, and finally the fix for the problem. Alternatively, the PSB may merely provide reference indicia leading to the solution.

Normally, high priority PSBs are faxed to ASCs, while low priority PSBs are mailed to ASCs. The present invention provides for the PSBs to be uploaded into memory associated with the corporate computer 202. Thus, the PSBs may be accessed through the web page hosted by the corporate computer 202.

Further, the corporation 200 may have a detailed list of all fueling stations 100 that have the corporation's products installed. This detailed list or database may, for example, be stored on corporate computer 202 and include not just the name and contact information for the fueling stations 100, but also a list of the products installed at each fueling station 100. Corporate computer 202 may be programmed to compare the components listed as contributing to the problem described in a PSB with the components installed at each fueling station. If there is a match, the corporate computer 202 may send the PSB or information relating to the PSB to the fueling station 100. An alternate embodiment sends every PSB to every fueling station 100. In particular, it is expected that the corporate computer 202 may communicate with the site controller 150 and potentially communicate with individual fuel dispensers 10, as well as other peripherals associated with the fueling station 100. This information may be stored in memory associated with the control system 50 or the site controller 150 as needed or desired. Appropriate encryption or authentication protocols may be used to help ensure that unauthorized tampering of the site controller 150 or the fuel dispensers 10 does not occur.

The information so delivered may contain the entire PSB, merely a title for the PSB, a list of symptoms.

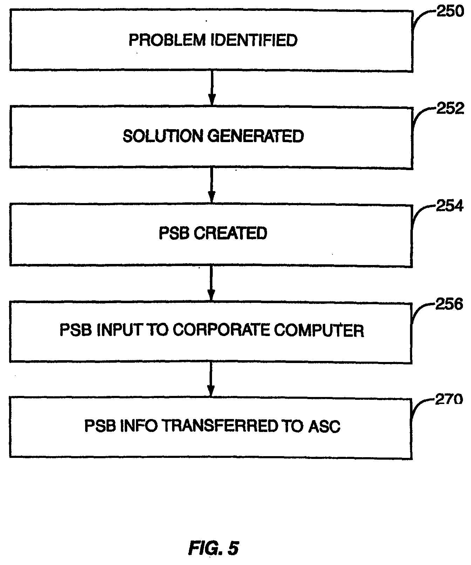

Similarly, PSBs may be generated and delivered to ASCs 204 as illustrated in Figure 5. As previously described, a problem is initially identified (block 250); a solution in generated (block 252); a PSB is created (block 254); and the PSB is input to the corporate computer 202 (block 256). The PSB is further delivered to each ASC (block 270). This delivery to the ASC 204 may take a number of different forms. In a first embodiment, the PSB may be transferred to the portable computing device 206 during routine accessing of the corporate computer 202 by the ASC 204. In a second embodiment, the PSB may be emailed to the portable computing device 206 from the corporate computer 202.

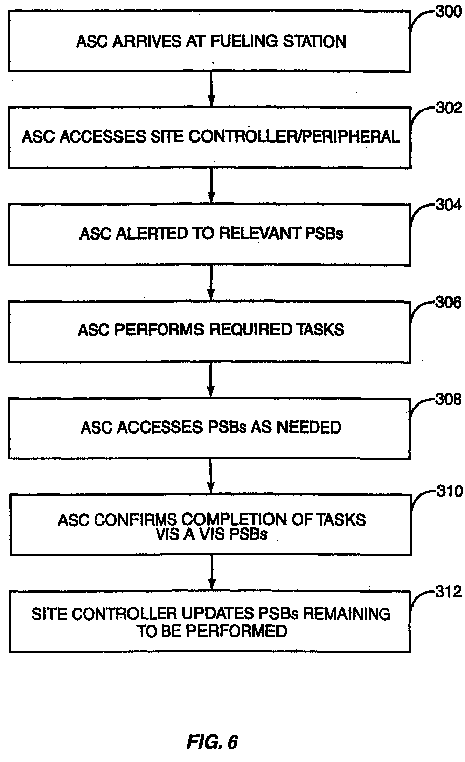

Having distributed the PSBs, the PSBs still must be implemented. Reference is made to Figure 6. An ASC 204 arrives at a fueling station 100 (block 300). This may be the result of a regularly scheduled maintenance call, a warranty call, a special request from the fueling station's operators, or the like. The ASC 204 accesses the site controller 150, the fuel dispenser 10, or other peripheral as needed (block 302). Accessing may comprise using the portable computing device 206, logging in through a manager's key, or the like as is well understood. The ASC 204 may use the display on the portable computing device 206, the display 13 on a fuel dispenser 10, or a display associated with the site controller 150 as needed or desired. In the exemplary embodiment, some information relating to the PSBs has been provided to the fueling station 100, so the ASC 204 is alerted to the PSBs, and preferably to only the PSBs that are relevant to that particular fueling station 100, that particular fuel dispenser 10, or that particular peripheral, depending on what the ASC 204 has accessed. Alerting may be done by providing the full text of the PSB, a title for each PSB, a simple tag line or descriptor for each PSB, or other comparable bit of information from which the ASC 204 may be reminded of the PSB and its relevance to the present situation. Further the alert message may appear on the display 13 of the fuel dispenser 10, a display associated with the site controller 150, may be an audible alert generated through a speaker associated with one or more of the devices, or other technique as needed or desired.

ASC 204 may perform the required tasks (block 306), during which time the ASC 204 may access PSBs as needed (block 308). Accessing the full text of the PSBs may comprise accessing through the device on which the ASC 204 is performing the service, e.g., the site controller 150, the fuel dispenser 10, or other peripheral. This is appropriate where the device has the PSBs stored in local memory or where the device has network access through which the ASC 204 may access the corporate computer 202. Alternately, the ASC 204 may look up the PSBs on the portable computing device 206 if available.

The ASC 204 then confirms completion of any tasks as they compare to the PSBs (block 310). In particular, if a task that was the subject of a PSB has been completed, the ASC 204 may inform the device that the task has been completed. The site controller 150, the fuel dispenser 10, or other peripheral then updates the PSBs remaining to be performed (block 312) in light of the ASC's confirmation. In this manner, PSBs that have been addressed are removed from the active PSB list, perhaps through deletion. This conserves memory and helps promote efficient servicing of the components of the fueling station 100. In particular, future visits from ASCs 204 can see with little difficulty what has been done and what remains to be done in terms of the PSBs.

It should be appreciated that the ASCs 204 may be alerted to the existence of unperformed PSBs in order of priority and/or date of issuance of the PSBs. In this manner, the ASC 204 is more likely to perform the most critical of the tasks underlying the PSBs or the oldest tasks.

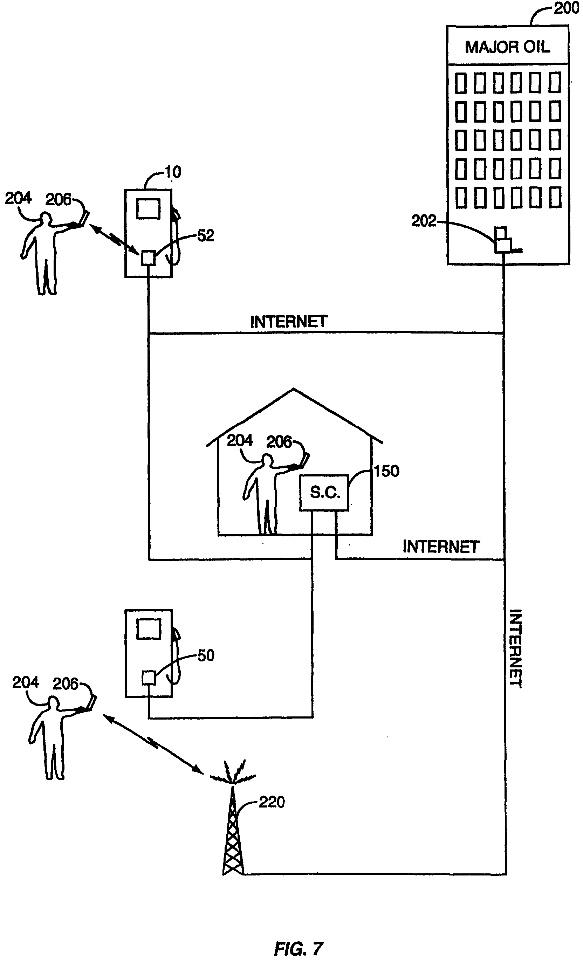

In some instances, the ASC 204 may need to contact the corporate computer 202 to retrieve a PSB that has been brought to his attention by a component at the fueling station 100. Reference is made to Figure 7, wherein an ASC 204 communicating with a control system 50 is illustrated. In particular, the ASC 204 is using the portable computing device 206 to use the Internet capabilities of the fuel dispenser 10 to contact the corporate computer 202 in the corporation 200.

Alternately, the ASC 204 may use the fuel dispenser 10 to site controller 150 connection to use the site controller 150 to contact the corporate computer 202. In still another embodiment, the ASC 204 uses the site controller 150 to contact the corporate computer 202 either directly or through the Internet. As previously described, the site controller 150 should have a wide bandwidth connection to remote sources 166, one of which could be the corporate computer 202. It should be appreciated that the ASC 204 need not use the portable computing device 206 to drive the fuel dispenser 10 or the site controller 150, rather, the microprocessor associated with each devices themselves could be used to communicate.

In still another embodiment, the portable computing device 206 may include a wireless modem that communicates with a cellular or other wireless system tower 210 and through that network establish a connection to the corporate computer 202. While it is particularly contemplated that the ASC 204 will be servicing fuel dispensers 10, it should be appreciated that the ASC 204 may be servicing other peripherals within the fueling station 100.

The various communications techniques are all designed to deliver or provide to the ASC 204 copies of the PSBs so that in the event that the PSBs are not stored at the fueling station 100 or on the portable computing device 206, the ASC 204 may still use the PSBs to their intended purpose.

Another aspect of the present invention allows the corporate computer 202 to check the outstanding (i.e., uncompleted) tasks corresponding to issued PSBs. In the event that the PSBs have a time stamp whose date exceeds a certain threshold, an alarm may be generated. This alarm may be sent to the fueling station operator to draw attention to the fact that certain PSBs have not been addressed at that location. Alternately, the device, such as the fuel dispenser 10, that has the PSBs stored thereon may perform the check and generate the alarm.

The threshold by which alarms are generated may be based in whole or in part on the priority of the PSB. High priority PSBs may have, for example, a thirty-day threshold, while low priority PSBs may have, for example, a ninety-day threshold. Other thresholds are possible, these are provided for exemplary purposes only.

The threshold in which PSBs are kept resident in memory in the fueling station device may be based on memory capacity allocated to PSBs instead of time. For instance, the fueling station device may have dedicated an amount of memory for storage of PSBs. The PSBs are stored in this memory. When new PSBs are received, they are stored in memory. If such memory is full or not large enough to store subsequent PSBs without overwriting stored PSBs, the newer PSBs overwrite already stored PSBs. Such overwriting can occur based on priority wherein PSBs already stored in memory can only be overwritten if the new PSBs to be stored is of a higher priority. Such overwriting can occur based on date of receipt wherein the PSBs stored in memory the longest are overwritten first.

Alternatively, the fueling station device may not have a predefined memory allocation for PSBs. The fueling station device may request memory allocation from its operating system just as any other operation requesting memory. PSBs are stored as received unless there is not enough memory to allocate for the newly received PSB. If this occurs, overwriting schemes, such as those described above can be used.

As another alternative, PSBs may be condensed to increase memory space. For example, if the full text of the PSBs were being stored, the text could be stripped and only the title retained to remind the user of its existence. The new PSB could likewise be condensed and more PSBs stored. Of course, this solution may likewise eventually lead to memory exhaustion, but is provided as an alternative.

It is envisaged that other alternative arrangements within the scope of the appended claims will occur to those skilled in the art.

## Claims

1. A method of delivering service information for a product to service personnel at a retail station (100), the method comprising:
generating a product service bulletin (254) relating to solutions (252) for known problems (250) associated with particular products or services;
downloading to at least one retail station device information in electronic form relating to said product service bulletin; and
delivering (270) said product service bulletin to the service personnel at said at least one retail station device (10).

2. The method of claim 1, wherein generating said product service bulletin is performed when requested (308) by the service personnel.

3. The method of claim 1 or 2 wherein generating said product service bulletin is performed automatically (304) when said at least one retail station device is accessed by the service personnel.

4. The method of any preceding claim further comprising generating a plurality of product service bulletins and delivering only relevant product service bulletins to said at least one retail station.

5. The method of any preceding claim wherein distributing to at least one retail station device (10) comprises distributing over a network.

6. The method of any preceding claim further comprising storing said information relating to said product service bulletin in memory (150) associated with a retail station device .

7. The method of claim 6, further comprising storing said product service bulletin in memory over previously stored product service bulletins in said retail station device.

8. The method of claim 7, further comprising comparing said product service bulletin to previously stored product service bulletins in said retail station device to determine if said product service bulletin has a higher priority and can overwrite said previously stored product service bulletins.

9. The method of claim 7 or 8 further comprising overwriting the oldest previously stored product service bulletin in said retail station device with said product service bulletin.

10. The method of any preceding claim wherein delivering said product service bulletin to said service personnel comprises providing an electronic copy of said product service bulletin.

11. The method of claim 7, wherein providing an electronic copy of said product service bulletin comprises providing an electronic copy over the Internet.

12. A computer readable medium, comprising software adapted to:
store a product service bulletin relating to solutions for known problems;
distribute to at least one retail station information relating to said product service bulletin.

13. The medium of claim 12, wherein said software is further adapted to inform service personnel as to the existence of said product service bulletin when requested at said at least one retail station device.

14. The medium of claim 12 or 13, wherein said software is further adapted to automatically inform service personnel as to the existence of said product service bulletin when the service personnel access said at least one retail station device.

15. A retail station device (10), comprising a control system (50) adapted to receive information in electronic form relating to a product service bulletin and deliver it to service personnel at said retail station device.

16. The device of claim 15, wherein said retail station device is a fuel dispenser (10).

17. The device of claim 15, wherein said retail station device is a kiosk (154).

18. The device of claim 1, wherein said retail station device is a point-of-sale (152).

19. The device of any one claims 15 to 18 wherein said control system further stores said information and subsequently provides said information to service personnel.

20. A system for improving service by service personnel at a retail station, comprising: a corporate computer (202) having product service bulletins stored in memory; a retail station (100) having a site controller (150) communicatively connected to said corporate computer; wherein said corporate computer downloads information relating to said product service bulletins to said site controller and allows the service personnel to access the product service bulletins.

21. A system as claimed in claim 20 wherein service personnel can access service bulletins on request.

22. The device or system of any one of claims 15 to 20 wherein said retail station is fueling station (102) for motor vehicles.

23. A method of delivering product service bulletins to service personnel substantially as hereinbefore described with reference to, and/or as illustrated in, one or more of the accompanying drawings.
